(19) **Europäisches Patentamt European Patent Office Office européen des brevets**

(11) **EP 4 644 876 A1**

(12) # EUROPEAN PATENT APPLICATION
published in accordance with Art. 153(4) EPC

(43) Date of publication:
05.11.2025 Bulletin 2025/45

(21) Application number: 24744588.5

(22) Date of filing: 12.01.2024

(51) International Patent Classification (IPC):
*G01N 21/85* (2006.01)    *B07C 5/342* (2006.01)

(52) Cooperative Patent Classification (CPC):
B07C 5/342; G01N 21/85

(86) International application number:
PCT/JP2024/000609

(87) International publication number:
WO 2024/154665 (25.07.2024 Gazette 2024/30)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 17.01.2023 JP 2023005240

(71) Applicant: Satake Corporation
Chiyoda-ku
Tokyo 101-0021 (JP)

(72) Inventors:
• HIWADA, Kanji
  Tokyo 101-0021 (JP)
• OKIMOTO, Kohtaro
  Tokyo 101-0021 (JP)
• MIYAMOTO, Tomoyuki
  Tokyo 101-0021 (JP)

(74) Representative: Hoffmann Eitle
Patent- und Rechtsanwälte PartmbB
Arabellastraße 30
81925 München (DE)

(54) **MEASUREMENT DEVICE AND SELECTION DEVICE**

(57) A measurement apparatus for measuring a condition of a target includes a conveyance portion configured to convey the target, an electromagnetic wave irradiation source configured to irradiate the target with an electromagnetic wave while the target is conveyed due to an action of the conveyance portion, a line sensor, an area sensor, and a discrimination portion configured to discriminate the condition of the target based on a first image acquired by the line sensor and a second image acquired by the area sensor. The measurement apparatus is configured **in** such a manner that a first detection region, which is a region where the target is detected by the line sensor, and a second detection region, which is a region where the target is detected by the area sensor, overlap each other or are located adjacent to each other.

FIG. 1

**Description**

TECHNICAL FIELD

The present disclosure relates to an optical measurement technique.

BACKGROUND

Conventionally, there have been known optical measurement apparatuses (hereinafter also simply referred to as measurement apparatuses) configured to discriminate a specific target (for example, a defective product) contained in targets using light information acquired by an optical sensor when irradiating the targets with light from a light source. As one type of such a measurement apparatus, Japanese Patent Application Laid-Open No. 2017-72529 described below discloses a measurement apparatus including two types of optical sensors, a line sensor and an area sensor.

In the measurement apparatus discussed in Japanese Patent Application Laid-Open No. 2017-72529, the area sensor is disposed on the way of a conveyance route of a belt conveyor that conveys a target, and images the target on the belt conveyor. The line sensor is disposed at a position downstream of the belt conveyor, and images the target that falls from a downstream end of the belt conveyor. This measurement apparatus determines a defective product based on the shape of the target in an image acquired by the area sensor, and also determines a defective product based on the color of the target in an image acquired by the line sensor. According to this measurement apparatus, a defective product can be accurately determined by making use of the respective advantages of the line sensor and the area sensor.

SUMMARY OF INVENTION

TECHNICAL PROBREM

However, the measurement apparatus discussed in Japanese Patent Application Laid-Open No. 2017-72529 raises such a problem that the size of the apparatus increases due to the above-described layout of the line sensor and the area sensor. These circumstances have led to a demand for reducing the size of the measurement apparatus including the line sensor and the area sensor.

SOLUTION TO PROBREM

The present disclosure has been made to solve the above-described problem, and can be realized in, for example, the following aspects.

According to a first aspect of the present disclosure, a measurement apparatus for measuring a condition of a target is provided. This measurement apparatus includes a conveyance portion configured to convey the target, an electromagnetic wave irradiation source configured to irradiate the target with an electromagnetic wave while the target is conveyed due to an action of the conveyance portion, a line sensor including a plurality of linearly arranged electromagnetic wave detection elements and configured to detect at least one of a reflected electromagnetic wave emitted from the electromagnetic wave irradiation source and reflected on the target and a transmitted electromagnetic wave emitted from the electromagnetic wave irradiation source and transmitted through the target, an area sensor including a plurality of two-dimensionally arranged electromagnetic wave detection elements and configured to detect at least one of the reflected electromagnetic wave and the transmitted electromagnetic wave, and a discrimination portion configured to discriminate the condition of the target based on a first image acquired by the line sensor and a second image acquired by the area sensor. The measurement apparatus is configured in such a manner that a first detection region, which is a region where the target is detected by the line sensor, and a second detection region, which is a region where the target is detected by the area sensor, overlap each other or are located adjacent to each other.

"While the target is conveyed due to an action of the conveyance portion" includes, for example, while the target is conveyed on the conveyance portion, and while the target is departed from the conveyance portion and present in the air after being conveyed by the conveyance portion (for example, while the target is falling from the conveyance portion and while the target is shot horizontally or obliquely upward by the conveyance portion). Further, the electromagnetic wave irradiation source may emit at least one of visible light, near-infrared light, and an X-ray.

According to this sorting apparatus, since the first detection region and the second detection region overlap each other or are located adjacent to each other, the line sensor and the area sensor can be disposed at positions relatively close to each other. This can contribute to a reduction in the size of a unit for irradiating the target with the electromagnetic wave and detecting at least one of the reflected electromagnetic wave and the transmitted electromagnetic wave, and thus a reduction in the size of the measurement apparatus.

According to a second aspect of the present disclosure, a measurement apparatus for measuring a condition of a target is provided. This measurement apparatus includes a conveyance portion, an electromagnetic wave irradiation source, a line sensor, an area sensor, and a discrimination portion, similarly to the first aspect. The measurement apparatus satisfies at least one of the followings. (A) A first detection region, which is a region where the target is detected by the line sensor, and a second detection region, which is a region where the target is detected by the area sensor, overlap each other. (B) The line sensor and the area sensor are configured to image the same target simultaneously. (C) A separation distance between the first detection region and the second detection region in an orthogonal direction, which is a direction orthogonal to a direction in which the plurality of electromagnetic wave detection elements of the line sensor is linearly arranged, is equal to or shorter than a width of the second detection region in the orthogonal direction. (D) The same electromagnetic wave irradiation source is shared between the line sensor and the area sensor. (E) Both the first detection region and the second detection region are located on an in-air conveyance trajectory of the target that is departed from the conveyance portion and is present in the air after being conveyed by the conveyance portion.

According to this measurement apparatus, the area sensor and the line sensor can be disposed at positions relatively close to each other by satisfying at least one of the above-described configurations (A) to (E). This can contribute to a reduction in the size of a unit for irradiating the target with the electromagnetic wave and detecting at least one of the reflected electromagnetic wave and the transmitted electromagnetic wave, and thus a reduction in the size of the measurement apparatus.

According to a third aspect of the present disclosure, in the first or second aspect, the measurement apparatus is configured in such a manner that the first detection region and the second detection region overlap each other. According to this aspect, a conveyance route of the target for imaging the target by the line sensor and the area sensor can be shortened, which can result in a further reduction in the size of the measurement apparatus.

According to a fourth aspect of the present disclosure, in any of the first to third aspects, the discrimination portion is configured to discriminate a color condition of the target based on the first image and also discriminate a condition about shape and/or dimension of the target based on the second image. According to this aspect, the color condition of the target can be accurately discriminated based on the first image acquired by the line sensor, and the condition about shape and/or dimension of the target can be also accurately discriminated based on the second image acquired by the area sensor. In other words, the conditions of the target suitable to the characteristics of the two types of sensors can be measured.

According to a fifth aspect of the present disclosure, in any of the first to fourth aspects, the measurement apparatus further includes an identification processing portion configured to determine identity between a first target, which is the target in the first image, and a second target, which is the target in the second image. According to this aspect, the discrimination result based on the first image acquired by the line sensor and the discrimination result based on the second image acquired by the area sensor can be associated with each other with respect to the same target. Therefore, further high-level information can be acquired with respect to the condition of the target. Further, the first aspect and the second aspect allow the first detection region of the line sensor and the second detection region of the area sensor to be disposed at positions relatively close to each other, thereby allowing the identification processing to be efficiently and accurately performed. Especially, according to the fifth aspect according to the third aspect, such an advantageous effect can be maximized.

According to a sixth aspect of the present disclosure, in the fifth aspect, the identification processing portion is configured to determine the identity between the first target and the second target based on a positional relationship between a centroid of one of the first target and the second target and an outline or a circumscribed rectangle of the other of the first target and the second target. According to this aspect, the identification processing can be performed efficiently and accurately with a relatively small calculation amount.

According to a seventh aspect of the present disclosure, in the fifth or sixth aspect, the measurement apparatus further includes a conveyance velocity detection portion configured to detect a conveyance velocity in a predetermined direction for each of the targets with respect to the target in transit. The discrimination portion is configured to make, based on the corresponding conveyance velocity in the predetermined direction, the discrimination of the condition of the target based on the first image. According to this aspect, the condition of the target can be accurately discriminated by reflecting a difference in the conveyance velocity of the target in the predetermined direction, which is a cause for exerting an influence on the first image acquired by the line sensor (i.e., reducing or eliminating an influence exerted on the first image by a difference in the conveyance velocity in the predetermined direction). In addition, since the conveyance velocity is detected for each target and this conveyance velocity is used to discriminate the condition of the corresponding target, the condition of the target can be further accurately discriminated compared with when a representative value of conveyance velocities of a plurality of targets is uniformly applied to the plurality of targets.

According to an eighth aspect of the present disclosure, in any of the fifth to seventh aspects according to the fourth aspect, the discrimination portion is configured to discriminate the color condition of the target based on the second image instead of or in addition to the first image when consistency in shape and/or dimension is lower than a predetermined degree between the first target and the second target that are determined to be the same. In the case of the low consistency in shape and/or dimension between the first target and the second target, it is highly likely that the first target (i.e., the target in the first image acquired by the line sensor) is imaged only over a narrower range of the entire target due to a direction in which the target faces when being imaged. For example, in the case where the target has a flattened shape with a large side surface and a small side surface, it is highly likely that only the small side surface is imaged if the consistency is low. Discriminating the color condition of the target based on the first image captured in this manner leads to a reduction in the discrimination accuracy. On the other hand, according to the eighth aspect, in such a case, the discrimination portion discriminates the color condition of the target based on the second image acquired by the area sensor (i.e., an image in which the target is likely to be imaged entirely), and therefore a reduction in the discrimination accuracy can be prevented or lessened.

According to a ninth aspect of the present disclosure, a sorting apparatus is provided. This sorting apparatus includes the measurement apparatus according to any of the first to eighth aspects, and a sorting portion configured to sort the target based on a result of the discrimination by the discrimination portion. According to this sorting apparatus, similar advantageous effects to any of the first to eighth aspects can be achieved.

According to a tenth aspect of the present disclosure, a measurement apparatus for measuring a condition of a target is provided. This measurement apparatus includes a conveyance portion configured to convey the target, an electromagnetic wave irradiation source configured to irradiate the target with an electromagnetic wave while the target is conveyed due to an action of the conveyance portion, a line sensor including a plurality of linearly arranged electromagnetic wave detection elements and configured to detect at least one of a reflected electromagnetic wave emitted from the electromagnetic wave irradiation source and reflected on the target and a transmitted electromagnetic wave emitted from the electromagnetic wave irradiation source and transmitted through the target, an area sensor including a plurality of two-dimensionally arranged electromagnetic wave detection elements and configured to detect at least one of the reflected electromagnetic wave and the transmitted electromagnetic wave, and a discrimination portion configured to discriminate the condition of the target based on a first image acquired by the line sensor and a second image acquired by the area sensor. The discrimination portion is configured to discriminate a color condition of the target based on the first image and also discriminate a condition about shape and/or dimension of the target based on the second image when consistency in shape and/or dimension is equal to or higher than a predetermined degree between a first target, which is the target in the first image, and a second target, which is the target in the second image, and discriminate the color condition of the target based on at least the second image and also discriminate the condition about shape and/or dimension of the target based on the second image when the consistency in shape and/or dimension is lower than the predetermined degree. According to this measurement apparatus, similar advantageous effects to the eighth aspect can be achieved.

According to an eleventh aspect of the present disclosure, a sorting apparatus is provided. This sorting apparatus includes a conveyance portion configured to convey the target, an electromagnetic wave irradiation source configured to irradiate the target with an electromagnetic wave while the target is conveyed due to an action of the conveyance portion, a line sensor including a plurality of linearly arranged electromagnetic wave detection elements and configured to detect at least one of a reflected electromagnetic wave emitted from the electromagnetic wave irradiation source and reflected on the target and a transmitted electromagnetic wave emitted from the electromagnetic wave irradiation source and transmitted through the target, an area sensor including a plurality of two-dimensionally arranged electromagnetic wave detection elements and configured to detect at least one of the reflected electromagnetic wave and the transmitted electromagnetic wave, a discrimination portion configured to discriminate the condition of the target based on a first image acquired by the line sensor and a second image acquired by the area sensor, and a sorting portion configured to sort the target by selectively using the condition of the target discriminated based on the first image, the condition of the target discriminated based on the second image, and consistency in shape and/or dimension between the target in the first image and the target in the second image.

According to this sorting apparatus, a determination about whether the target should be removed by being sorted out can be changed based on the consistency in shape and/or dimension between the first target and the second target (i.e., based on whether almost the whole target is imaged by the line sensor or only a small part of the target is imaged). Therefore, the sorting accuracy can be improved. For example, in the case of the low consistency, the sorting portion may discriminate the color condition of the target based on the second image acquired by the line sensor and sort the target based on a result thereof, similarly to the eighth aspect. Alternatively, in the case where the sorting apparatus is configured in a multistage manner (the sorting apparatus includes N ordered sorting systems not arranged in parallel (N is an integer equal to or larger than 2). When the consistency is low at an M-th sorting system (M is any of 1 to N), the sorting portion in the M-th sorting system may determine a destination to which the target corresponding to this low consistency is supplied from the M-th sorting system so as to give again the target an opportunity to be imaged, discriminated, and sorted at a sorting system other than the M-th sorting system.

BRIEF DESCRIPTION OF THE DRAWINGS

Fig. 1 is a schematic view illustrating an overview of the configuration of a measurement apparatus according to one embodiment.

Fig. 2 illustrates the relationship between one target and scan numbers of a sensor.

Fig. 3 is a schematic view illustrating the positional relationship between a first detection region by a line sensor, a second detection region by an area sensor, and a chute.

Fig. 4 is a schematic view illustrating the positional relationship between the line sensor and the area sensor.

Fig. 5 illustrates one example of a first image acquired by the line sensor that is used in identification processing.

Fig. 6 illustrates one example of a second image acquired by the area sensor that is used in the identification processing.

Fig. 7 is a schematic view illustrating a method for the identification processing.

Fig. 8 illustrates one example of a method for calculating a conveyance velocity of the target.

Fig. 9 illustrates an example of a method for correcting the image based on a conveyance velocity of the target in a second direction.

Fig. 10 illustrates an example of a method for correcting the image based on a conveyance velocity of the target in a first direction.

Fig. 11 illustrates the example of the method for correcting the image based on the conveyance velocity of the target in the first direction.

Fig. 12 is a schematic view illustrating the positional relationship between the first detection region, the second detection region, and the chute according to an alternative embodiment.

DETAILED DESCRIPTION OF THE EMBODIMENTS

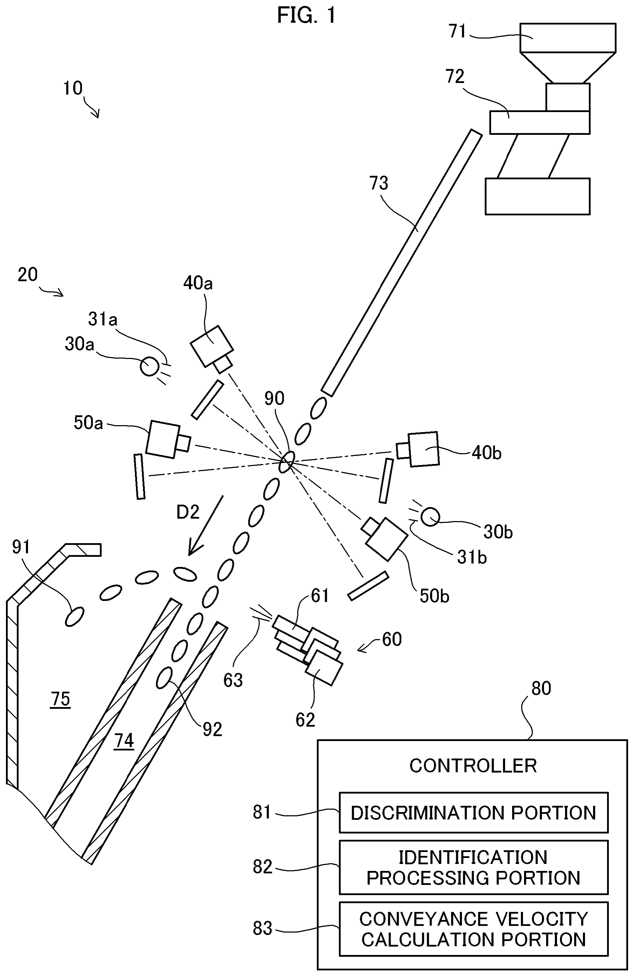

Fig. 1 is a schematic view illustrating an overview of the configuration of an optical sorting apparatus (hereinafter simply referred to as a sorting apparatus) 10 according to one embodiment. In the present embodiment, the sorting apparatus 10 is used to measure a condition (i.e., a quality) of a rice grain (more specifically, brown rice or milled rice), which is one example of a sorting target (hereinafter simply referred to as a target) 90, and sort the target 90 into an acceptable product and a defective product based on a result thereof. The defective product can include, for example, broken rice, an immature grain, a colored grain, a damaged grain, dead rice, and a foreign object (for example, a small stone, mud, and a glass piece). However, the target 90 is not limited to brown rice or milled rice, and may be any granular object. The target 90 may be, for example, unhulled rice, a wheat grain, a bean (a soybean, a chickpea, a green soybean, or the like), resin (a pellet or the like), or a rubber piece.

As illustrated in Fig. 1, the sorting apparatus 10 includes a detection unit 20, a storage tank 71, a feeder 72, a chute 73, an acceptable product discharge gutter 74, a defective product discharge gutter 75, a sorting portion 60, and a controller 80. The controller 80 controls the overall operation of the sorting apparatus 10. The controller 80 also functions as a discrimination portion 81, an identification processing portion 82, and a conveyance velocity calculation portion 83. The functions of the controller 80 may be realized by a CPU executing a predetermined program, may be realized by a dedicated circuit (for example, a PLD or an ASIC), or may be realized by a combination of a CPU and a dedicated circuit. Further, the functions of the controller 80 may be assigned to a single integrated device or may be divided and assigned to a plurality of devices. The details of the functions of the controller 80 will be described below.

The storage tank 71 temporarily stores the target 90 therein. The feeder 72 feeds the target 90 stored in the storage tank 71 onto the chute 73, which is one example of a conveyance portion for conveying the target. The target 90 fed onto the chute 73 slides on the chute 73 downward, and falls from the lower end of the chute 73. The chute 73 has a predetermined width sufficient to allow a large number of targets 90 to fall all at once. A conveyor may be employed as the conveyance portion instead of the chute 73.

The detection unit 20 irradiates the target 90 that has slid down from the chute 73 (i.e., the target 90 falling from the chute 73) with light, and detects light associated with the target 90 (more specifically, transmitted light transmitted through the target 90 and/or reflected light reflected on the target 90). In an alternative embodiment, the target 90 may be irradiated with the light while sliding on the chute 73. Alternatively, in the case where the conveyor is employed instead of the chute 73, the target 90 may be irradiated with the light while being conveyed on the conveyor or falling from the conveyor. In a further alternative embodiment, the target 90 may be irradiated with the light after being shot horizontally or obliquely upward by the conveyance portion (for example, a chute including a lower end portion angled horizontally or obliquely upward, or a supply device that blows out the target in a desired direction using air).

As illustrated in Fig. 1, the detection unit 20 includes a first light source 30a and a second light source 30b as one example of an electromagnetic wave irradiation source, a first line sensor 40a and a second line sensor 40b, and a first area sensor 50a and a second area sensor 50b. The first light source 30a, the first line sensor 40a, and the first area sensor 50a are disposed on one side (also referred to as a front side) with respect to a conveyance route of the target 90 (i.e., a falling trajectory from the chute 73). On the other hand, the second light source 30b, the second line sensor 40b, and the second area sensor 50b are disposed on the other side (also referred to as a rear side) with respect to the conveyance route of the target 90.

In the present embodiment, each of the light sources 30a and 30b is a light source unit for irradiating the target 90 with visible light while the target 90 is conveyed (i.e., falling from the chute 73). The first light source 30a emits first light 31a. Similarly, the second light source 30b emits second light 31b. Each of the light 31a and the light 31b has a wavelength corresponding to red, a wavelength corresponding to green, and a wavelength corresponding to blue. In the present embodiment, each of the light sources 30a and 30b includes a so-called color LED. Further, each of the light sources 30a and 30b is a line light source in which a plurality of LEDs are arranged in the width direction of the chute 73. However, the specifications of the light sources 30a and 30b (for example, the number, the light emission method, and the wavelength range) are not especially limited. For example, each of the light sources 30a and 30b may be an area light source in which a plurality of LEDs are two-dimensionally arranged.

Each of the line sensors 40a and 40b is an optical sensor, and can detect red light, green light, and blue light individually separately. Each of the line sensors 40a and 40b includes a plurality of light detection elements arranged linearly in a first direction D1 (this is also the width direction of the chute 73 in the present embodiment) intersecting with a conveyance direction of the target 90.

Each of the area sensors 50a and 50b is a monochrome optical sensor. However, in an alternative embodiment, each of the area sensors 50a and 50b may be a color sensor that can detect red light, green light, and blue light individually separately. Each of the area sensors 50a and 50b includes a plurality of light detection elements arranged two-dimensionally (along the first direction D1 and a second direction D2 orthogonal to the first direction D1 in the present embodiment).

Each of the line sensors 40a and 40b and the area sensors 50a and 50b is a CCD sensor in the present embodiment, but may be another type of sensor such as a CMOS sensor. Further, the specifications of the line sensors 40a and 40b and the area sensors 50a and 50b are not especially limited, and can be determined in any manner according to the specifications of the light sources 30a and 30b.

Each of the line sensors 40a and 40b and the area sensors 50a and 50b detects the light associated with the target 90 that is being conveyed. More specifically, each of the first line sensor 40a and the first area sensor 50a on the front side can detect the first light 31a emitted from the first light source 30a on the front side and reflected on the target 90 (hereinafter also referred to as the reflected light 31a) and the second light 31b emitted from the second light source 30b on the rear side and transmitted through the target 90 (hereinafter also referred to as the transmitted light 31b). Each of the second line sensor 40b and the second area sensor 50b on the rear side can detect the second light 31b emitted from the second light source 30b on the rear side and reflected on the target 90 (hereinafter also referred to as the reflected light 32b) and the first light 31a emitted from the first light source 30a on the front side and transmitted through the target 90 (hereinafter also referred to as the transmitted light 31a).

As clearly understood from the above description, the light sources 30a and 30b are shared between the line sensors 40a and 40b and the area sensors 50a and 50b in contrast to a configuration including a dedicated light source for a line sensor and a dedicated light source for an area sensor separately. According to such a configuration, the number of components can be reduced.

What kind of light is detected by the line sensors 40a and 40b and the area sensors 50a and 50b is determined based on a lighting pattern of the light sources 30a and 30b. In a first lighting pattern where the first light source 30a and the second light source 30b are on at the same time, each of the first line sensor 40a and the first area sensor 50a detects light generated by combining the reflected light 31a and the transmitted light 31b (hereinafter also referred to as reflected and transmitted light), and each of the second line sensor 40b and the second area sensor 50b detects reflected and transmitted light generated by combining the reflected light 31b and the transmitted light 31a. In a second lighting pattern where the first light source 30a is on and the second light source 30b is off, each of the first line sensor 40a and the first area sensor 50a detects the reflected light 31a and each of the second line sensor 40b and the second area sensor 50b detects the transmitted light 31a. In a third lighting pattern where the first light source 30a is off and the second light source 30b is on, each of the first line sensor 40a and the first area sensor 50a detects the transmitted light 31b and each of the second line sensor 40b and the second area sensor 50b detects the reflected light 31b. Hereinafter, at least one of the above-described reflected light, transmitted light, and reflected and transmitted light will also be referred to as the light associated with the target 90.

Which pattern is employed, the first lighting pattern, the second lighting pattern, or the third lighting pattern can be determined in any manner according to the kind and properties of the target 90, and the type of the defective product required to be removed. Only any one of the first to third lighting patterns may be employed. Alternatively, two or more lighting patterns out of the first to third lighting patterns may occur alternately at predetermined time intervals or according to a predetermined repetition rule.

In the present embodiment, a detection region of the first line sensor 40a (i.e., a position on the conveyance route of the target 90 where the target 90 is imaged, i.e., a region where the target 90 is imaged while being scanned once), and a detection region of the second line sensor 40b are set so as to coincide with each other. Further, a detection region of the first area sensor 50a and a detection region of the second area sensor 50b are set so as to coincide with each other.

An output from each of the line sensors 40a and 40b and the area sensors 50a and 50b, i.e., an analog signal indicating a detected light intensity is converted into a digital signal by an AC/DC converter (not illustrated). This digital signal is input to the controller 80 as image data.

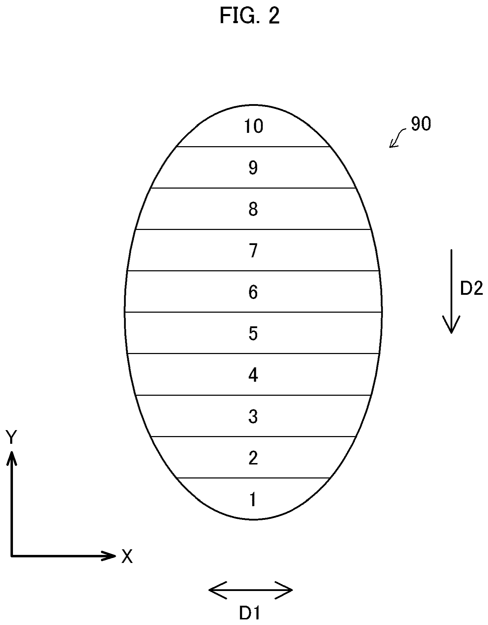

As widely known, the line sensors 40a and 40b can acquire a linear image by scanning a target once. Therefore, an image having a predetermined height in a direction corresponding to the second direction D2 (an image sized to contain at least one target 90, and, typically, an image sized to contain a large number of targets 90) can be acquired by combining a plurality of linear images acquired by scanning the target 90 a plurality of times. For example, as illustrated in Fig. 2, an image of one entire target 90 is acquired for each of R, G, and B colors by scanning the target 90 ten times (citing an example supposing that the target 90 is scanned a smaller number of times than reality for simplification of the description). Numbers 1 to 10 illustrated in Fig. 2 indicate what number scan results in imaging of a linear region labeled this number. For example, image data of a region labeled "2" is acquired by the second scan. In the following description, the image acquired by the first line sensor 40a and/or the second line sensor 40b will also be referred to as a first image.

On the other hand, the area sensors 50a and 50b can acquire an image having a predetermined height in a direction corresponding to the second direction D2 (typically, an image sized to contain a large number of targets 90) by scanning the target 90 once. In the following description, the image acquired by the first area sensor 50a and/or the second area sensor 50b will also be referred to as a second image. In the present embodiment, a scan time during which the area sensors 50a and 50b scan the target 90 once (in units of sec) is set to a longer duration than a scan time during which the line sensors 40a and 40b scan the target 90 once. In other words, a frame rate of the area sensors 50a and 50b (in units of Hz or frame/sec) is set to a lower rate than a scan rate of the line sensors 40a and 40b (in units of Hz or line/sec). However, these scan times can be set in any manner.

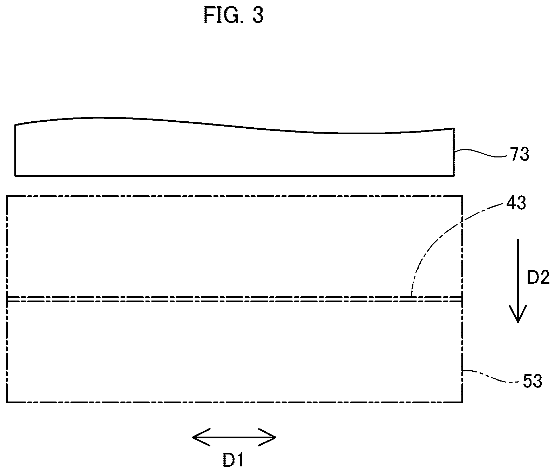

Fig. 3 is a schematic view illustrating the positional relationship between a first detection region 43, a second detection region 53, and the chute 73. The first detection region 43 is the detection region detected by the line sensors 40a and 40b. The first detection region 43 has a linear shape extending elongatedly in the first direction D1 due to the layout of the light detection elements of the line sensors 40a and 40b. The second detection region 53 is the detection region detected by the first area sensor 50a and the second area sensor 50b. The second detection region 53 has a rectangular shape extending in the first direction D1 and the second direction D2 due to the layout of the light detection elements of the area sensors 50a and 50b. The first detection region 43 and the second detection region 53 are set in such a manner that both their end portions in the first direction D1 are each located outside both the ends of the chute 73 in the first direction D1. In the present direction, the first detection region 43 and the second detection region 53 completely overlap each other. Further, in the present embodiment, the first detection region 43 is located between both the edge portions of the second detection region 53 in the second direction D2 (located approximately at the center in the example illustrated in Fig. 3). The first detection region 43 and/or the second detection region 53 may be divided into a plurality of detection regions arranged in the first direction D1. More specifically, in the case where a plurality of line sensors is arranged in the first direction D1, a plurality of first detection regions 43 respectively corresponding to the plurality of line sensors are arranged in the first direction D1. Similarly, in the case where a plurality of area sensors is arranged in the first direction D1, a plurality of second detection regions 53 respectively corresponding to the plurality of area sensors are arranged in the first direction D1.

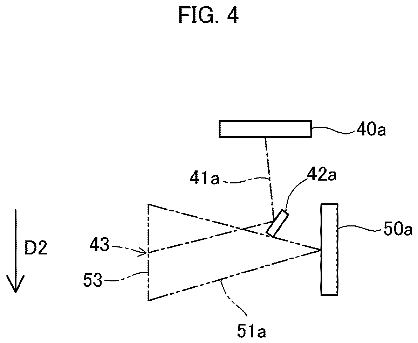

Fig. 4 is a schematic view illustrating the positional relationship between the first line sensor 40a and the first area sensor 50a. As illustrated, a mirror 42a for reflecting light 41a to be received by the first line sensor 40a is disposed at a position not interfering with an angle of view 51a of the first area sensor 50a. The second line sensor 40b and the second area sensor 50b are also in a similar positional relationship, although this is not illustrated. Due to such a configuration, the overlap between the first detection region 43 and the second detection region 53 illustrated in Fig. 3 is realized. In an alternative embodiment, the first line sensor 40a may be disposed adjacent to the area sensor 50a at a position not interfering with the angle of view 51a of the first area sensor 50a, and receive the light 41a without the intervention of the mirror 42a.

The controller 80 determines a condition of the target 90 based on the first image (the images acquired by the line sensors 40a and 40b) and the second image (the images acquired by the area sensors 50a and 50b). Such a determination is made with respect to each target 90 as the processing by the discrimination portion 81. In the present embodiment, the condition that should be determined includes a color condition (i.e., an optical condition), and a condition about shape and/or dimension. In the present embodiment, the controller 80 determines the color condition based on the first image and also determines the condition about shape and/or dimension based on the second image. Further, the condition includes a feature quantity expressed by a physical quantity and a quality determined based on the feature quantity.

The feature quantity of the color condition includes a color tone value of each pixel in the image representing the target 90. The feature quantity of the condition about shape and/or dimension can include, for example, at least one of an area, a height, a width, a perimeter length, and a degree of circularity of a whole and/or part of the target 90. Such a feature quantity may be calculated as a value in units of the number of pixels forming the image. Alternatively, the feature quantity may be calculated as a value expressed in an actual dimension based on a value in units of the number of pixels and the resolution of the area sensors 50a and 50b.

In the present embodiment, the "quality" includes, for example, the classification between the acceptable product (i.e., a relatively high-quality rice grain) and the defective product (i.e., a relatively low-quality rice grain and/or a foreign object). However, the "quality" may include the type of the defect (for example, into which the defect is classified, broken rice, an immature grain, a colored grain, a damaged grain, dead rice, or a foreign object). Alternatively, the "quality" may include a classification between an object that should be removed and an object that should not be removed by the sorting portion 60. Further, the "quality" includes a quality determined based on the color condition and a quality determined based on the condition about shape and/or dimension. A defective product determined based on the color condition can include, for example, an immature grain, a colored grain, a damaged grain, dead rice, and a foreign object. A defective product determined based on the condition about shape and/or dimension can include, for example, broken rice, a bug-damaged grain, and a foreign object.

In the present embodiment, the discrimination portion 81 determines whether the target 90 is the acceptable product or the defective product by comparing the feature quantity of the color condition (i.e., the tone value of the image data) and a predetermined threshold value (i.e., based on whether the feature quantity of the color condition falls within a predetermined normal range). Such a determination may be made based on a representative value (for example, a mean, a median, a maximum, or a minimum) of tone values of a plurality of pixels forming the image of the target 90. Alternatively, the defective product may include a target 90 having a partial defect equal to or larger than a predetermined size. Such a partial defect may be determined based on the fact that a predetermined or larger number of pixels have tone values outside the normal range among the plurality of pixels forming the image of the target 90 (i.e., the area of the defective portion is a predetermined value or larger).

Further, in the present embodiment, the discrimination portion 81 determines whether the target 90 is the acceptable product or the defective product by comparing the feature quantity of the condition about shape and/or dimension and a predetermined threshold value (i.e., based on whether the feature quantity about shape and/or dimension falls within a predetermined normal range).

In the present embodiment, the controller 80 can perform identification processing for determining whether the target 90 in the first image acquired by the line sensors 40a and 40b and the target 90 in the second image acquired by the area sensors 50a and 50b are the same, as the processing by the identification processing portion 82 (the details thereof will be described below). As a result, the controller 80 can associate the presence/absence of a defect regarding the color condition (hereinafter also referred to as a color defect) and the presence/absence of a defect regarding the condition about shape and/or dimension (hereinafter also referred to as a shape/dimension defect) with each other with respect to the same target 90.

The sorting portion 60 sorts the target 90 based on the condition determined by the discrimination portion 81. This sorting is conducted by a trajectory change operation for changing the trajectory of a specific target 90. More specifically, the sorting portion 60 includes a plurality of nozzles 61 and as many valves 62 as a number corresponding to the nozzles 61 (the number of valves 62 is equal to the number of nozzles 61 in the present embodiment, but may be different from the number of nozzles 61). The plurality of nozzles 61 are arrayed in the first direction D1.

The plurality of nozzles 61 are connected to a compressor (not illustrated) via the plurality of valves 62, respectively. The plurality of valves 62 are selectively opened according to a control signal from the controller 80, by which the plurality of nozzles 61 selectively eject air 63 toward the target 90 having a specific defect. In the present embodiment, the target 90 to which the air 63 should be ejected is a target 90 having the color defect and the shape/dimension defect. However, the target 90 to which the air 63 should be ejected may be a target 90 having at least one of the color defect and the shape/dimension defect.

The target 90 having the specific defect is blown off by the air 63, and is deviated from the falling trajectory from the chute 73 and guided to the defective product discharge gutter 75 (illustrated as a target 91 in Fig. 1). On the other hand, the air 63 is not ejected toward the target 90 determined to be the acceptable product. Therefore, the target 90 determined to be the acceptable product is guided to the acceptable product discharge gutter 74 without changing the falling trajectory thereof (illustrated as a target 92 in Fig. 1).

In an alternative embodiment, the conveyance route of the target 90 may be changed by ejecting the air 63 toward the target 90 that is sliding on the chute 73, instead of the configuration that ejects the air 63 toward the target 90 after the target 90 falls from the chute 73. Further, a belt conveyor may be employed as the conveyance means instead of the chute 73. In this case, the air may be ejected toward the target that falls from one end of the belt conveyor. Alternatively, the air may be ejected toward the target that is being conveyed on the belt conveyor.

In a further alternative embodiment, the air 63 may be ejected toward the target 90 determined to be the acceptable product (so-called reverse screening) instead of the configuration that ejects the air 63 toward the target 90 determined to be the defective product.

Further, the trajectory change operation is not limited to the ejection of the air 63, and may be realized by employing any other known method.

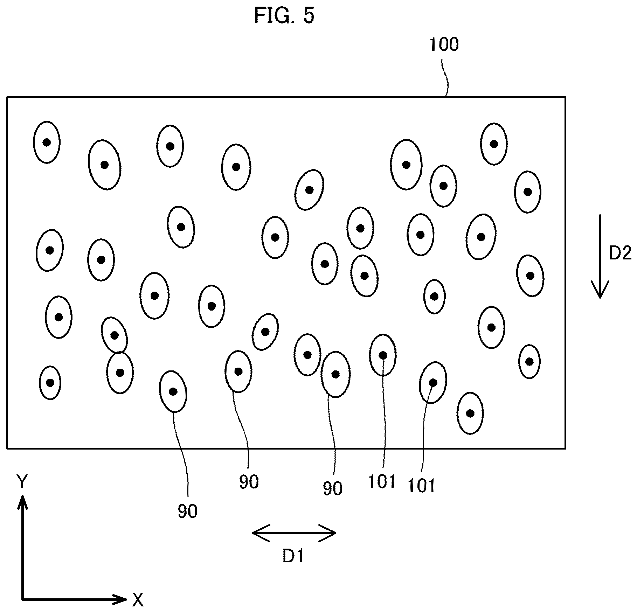

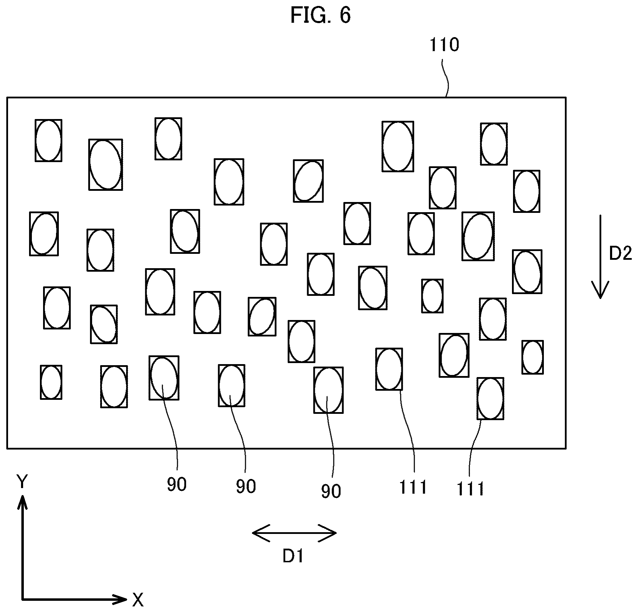

Now, the identification processing will be described. In the following description, the identification processing will be described as identification processing between the target 90 in the first image 100 acquired by the first line sensor 40a and the target 90 in the second image 110 acquired by the first area sensor 50a, but the identification processing is also performed in a similar manner between the target 90 in the first image 100 acquired by the second line sensor 40b and the target 90 in the second image 110 acquired by the second area sensor 50b. Fig. 5 illustrates one example of the first image 100 acquired by the first line sensor 40a. Fig. 6 illustrates one example of the second image 110 acquired by the first area sensor 50a.

The second image 110 is an image of one frame acquired by the first area sensor 50a (an image acquired by scanning the target 90 once). The first image 100 is an image acquired by scanning the target 90 a plurality of times by the first line sensor 40a, and has the same size as the second image 110 (the actual dimension in the direction corresponding to the second direction D2) in the present example. However, the size of the first image 100 and the size of the second image 110 do not have to be the same. The first image 100 and the second image 110 are images representing the target 90 at the same time point. The controller 80 can synchronize the first image 100 and the second image 110 based on a timing of receiving image data from the first line sensor 40a and a timing of receiving image data from the first area sensor 50a.

To perform the identification processing, the controller 80 first calculates a centroid 101 of the target 90 with respect to each target 90 in the first image 100. The coordinate value of the centroid 101 may be expressed at a resolution in units of pixels or may be expressed at a resolution higher than that. The pixels representing the target 90 can be easily recognized by, for example, binarizing one of the respective images of the R, G, and B colors. The coordinate value of the centroid 101 can be calculated by, for example, dividing a sum of the coordinate values of the individual coordinate points by the number of coordinate points with respect to each of an X coordinate (this is a coordinate in an X direction corresponding to the first direction D1) and a Y coordinate (this is a coordinate in a Y direction corresponding to the second direction D2). Fig. 5 illustrates the centroid 101 calculated with respect to each target 90 in the first image 100.

Next, the controller 80 calculates a circumscribed rectangle 111 with respect to each target 90 in the second image 110. The circumscribed rectangle refers to a rectangle circumscribed around the outline of the target 90. In the present embodiment, the circumscribed rectangle 111 is constituted by a pair of sides parallel with the X direction and a pair of sides parallel with the Y direction. The circumscribed rectangle 111 can be easily acquired based on a pixel having the smallest X coordinate value, a pixel having the largest X coordinate value, a pixel having the smallest Y coordinate value, and a pixel having the largest Y coordinate value among the plurality of pixels forming the target 90. Fig. 6 illustrates the circumscribed rectangle 111 acquired with respect to each target 90 in the second image 110.

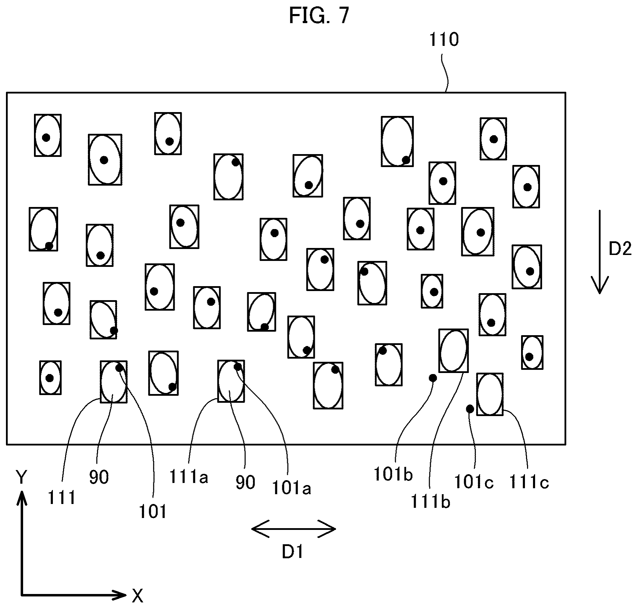

Next, the controller 80 determines the corresponding relationship between each target 90 in the first image 100 and each target 90 in the second image 110 based on the positional relationship between the centroids 101 in the first image 100 and the circumscribed rectangles 111 in the second image 110. Fig. 7 illustrates a state when the centroids 101 illustrated in Fig. 5 are overlaid on the second image 110 illustrated in Fig. 6. For example, if some centroid 101 is located inside or on the outline of some circumscribed rectangle 111 (exemplarily illustrated as a centroid 101a and a circumscribed rectangle 111a in Fig. 7), the controller 80 determines that the target 90 corresponding to this centroid 101 and the target 90 corresponding to this circumscribed rectangle 111 are the same.

Further, for the centroid 101 and the circumscribed rectangle 111 not having such a positional relationship (exemplarily illustrated as centroids 101b and 101c and circumscribed rectangles 111b and 111c in Fig. 7), the controller 80 determines that a combination of the centroid 101 and the circumscribed rectangle 111 located at the shortest separation distance from each other corresponds to the same target 90. To make such a determination, for example, the controller 80 may perform processing of enlarging the circumscribed rectangle 111 in the X direction and the Y direction at the same enlargement ratio in a stepwise manner until one centroid 101 starts to be contained in the circumscribed rectangle 111. In the example illustrated in Fig. 7, the circumscribed rectangle 111b is located closer to the centroid 101b than the circumscribed rectangle 111c is, and therefore the target 90 is determined in such a manner that the target 90 corresponding to the centroid 101b and the target 90 corresponding to the circumscribed rectangle 111b are the same. Similarly, the circumscribed rectangle 111c is located closer to the centroid 101c than the circumscribed rectangle 111b is, and therefore the target 90 is determined in such a manner that the target 90 corresponding to the centroid 101c and the target 90 corresponding to the circumscribed rectangle 111c are the same.

According to such an identification method, the identification processing can be performed efficiently and accurately with a relatively small calculation amount. In addition, the controller 80 acquires the circumscribed rectangle 111 from the second image 110 acquired by the first area sensor 50a, and therefore identification accuracy can be improved compared with when the identification processing is performed based on the positional relationship between a circumscribed rectangle around the target 90 in the first image 100 and a centroid of the target 90 in the second image 110.

The resolution of the line sensor in the second direction D2 is determined based on the distance by which the target 90 moves in the second direction D2 during one scan time. More specifically, the resolution in the second direction D2 is expressed as a product of one scan time and a conveyance velocity V2 of the target 90 in the second direction D2. This means that the size (i.e., the number of pixels) of the target 90 in the direction corresponding to the second direction D2 (i.e., the Y direction in Fig. 2) in the image varies depending on the conveyance velocity V2. More specifically, the conveyance velocity V2 of the target 90 in the second direction D2 and the size of the target 90 in the direction corresponding to the second direction D2 in the image are in an inverse proportion relationship. This leads to a difference made between the size of the target 90 in the direction corresponding to the second direction D2 in the image and the actual size when the target 90 is conveyed at the conveyance velocity V2 different from a conveyance velocity expected in advance (i.e., a design value regarding the conveyance velocity V2). Hereinafter, such a characteristic of the line sensor will also be referred to as a first characteristic. The resolution of the line sensor in the first direction D1 is kept constant independently of the conveyance velocity of the target 90. Further, in the case of the line sensor, simply combining the plurality of linear images acquired by the line sensor results in undesirable detection of a shape distorted in the first direction D1 compared with the actual shape of the target 90 if the conveyance direction of the target 90 accidentally contains a component in the first direction D1. Hereinafter, such a characteristic of the line sensor will also be referred to as a second characteristic.

These first characteristic and second characteristic of the line sensor (especially the first characteristic) exert a larger influence on the calculation of the circumscribed rectangle than on the calculation of the centroid. Therefore, the influence of the first characteristic and the second characteristic can be reduced and the identification accuracy can be improved by acquiring the circumscribed rectangle 111 from the second image 110 acquired by the first area sensor 50a along with acquiring the centroid 101 from the first image 100 acquired by the first line sensor 40a, like the present embodiment. However, the identification processing may be performed based on the positional relationship between the circumscribed rectangle of the target 90 in the first image 100 and the centroid of the target 90 in the second image 110.

In an alternative embodiment, the identification processing may be performed based on the positional relationship between the centroid 101 of the target 90 in the first image 100 and the outline (the outer periphery) of the target 90 in the second image 110 instead of the circumscribed rectangle. Similar advantageous effects can also be achieved by such a method. The identification processing can be performed by any method without being limited to the above-described method. For example, the identification processing may be performed based on the positional relationship (the separation distance) between the centroid of the target 90 in the first image 100 and the centroid of the target 90 in the second image 110. Alternatively, the identification processing may be performed based on the positional relationship (how much they overlap each other, or the separation distance) between the circumscribed rectangle (or the outline) of the target 90 in the first image 100 and the circumscribed rectangle (or the outline) of the target 90 in the second image 110.

According to the identification processing, the presence/absence of the color defect based on the first image 100 and the presence/absence of the shape/dimension defect based on the second image 110 can be associated with each other with respect to the same target 90, and therefore further high-level information can be acquired with respect to the condition of the target 90 and this allows the sorting apparatus 10 to achieve further high-level sorting. For example, the sorting apparatus 10 can sort the target 90 with the aim of removing only the target 90 having both the color defect and the shape/dimension defect as described above. Alternatively, the sorting apparatus 10 can sort the target 90 with the aim of removing only a target 90 having a severe color defect, a target 90 having a severe shape/dimension defect, and a target 90 having both an intermediate color defect and an intermediate shape/dimension defect. In other words, the sorting apparatus 10 may prepare a plurality of threshold values for determining each of the color defect and the shape/dimension defect, thereby setting a plurality of defect levels for each of the color defect and the shape/dimension defect, and determining what kind of target should be removed based on a comprehensive evaluation of the defect level of the color defect and the defect level of the shape/dimension defect.

Further, in the present embodiment, the controller 80 detects a conveyance velocity in a predetermined direction for each target 90 with respect to the target 90 that is being conveyed and corrects the first image 100 based on this conveyance velocity for the purpose of improving the accuracy of discriminating the condition of the target 90 based on the first image 100 acquired by the line sensors 40a and 40b. In the present embodiment, the predetermined direction includes both the first direction D1 and the second direction D2. However, the predetermined direction may be only one of the first direction D1 and the second direction D2. In the following description, a method for correcting the first image 100 will be described assuming that the first image 100 is acquired by the line sensor 40a.

In the present embodiment, a conveyance velocity V1 in the first direction D1 and the conveyance velocity V2 in the second direction D2 are detected as processing by the conveyance velocity calculation portion 83 using the first area sensor 50a and/or the second area sensor 50b. In the case where both the first area sensor 50a and the second area sensor 50b are used, a representative value of a conveyance velocity based on the first area sensor 50a and a conveyance velocity based on the second area sensor 50b may be detected. In the following description, the detection of the conveyance velocity will be described assuming that the first area sensor 50a is used. The controller 80 calculates the conveyance velocities V1 and V2 with respect to the same target 90 in two images acquired at two different timings (for example, consecutive two scans) by the first area sensor 50a, based on a movement distance and a movement time between these two timings.

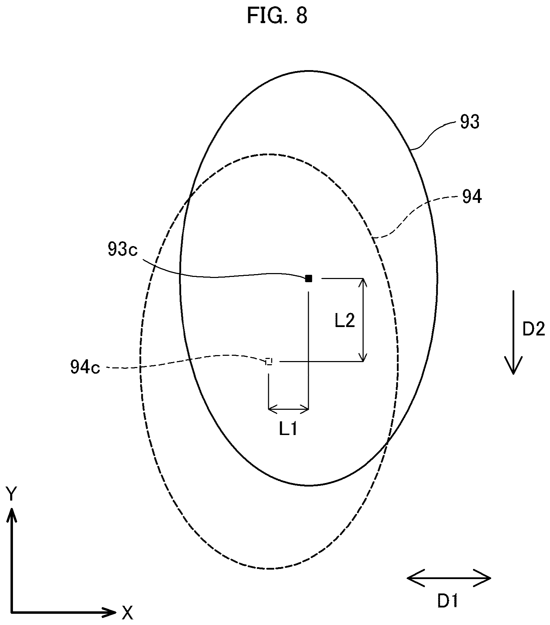

Fig. 8 illustrates one example of a method for calculating the conveyance velocities V1 and V2 in such a manner. Fig. 8 illustrates the target 90 in an image acquired by an N-th scan (N is a natural number) as a target 93, and the target 90 (the target 90 same as the target 93) in an image acquired by an N+1-th scan as a target 94. To calculate the conveyance velocities V1 and V2, the controller 80 first calculates each of centroids 93c and 94c of the targets 93 and 94. A method for calculating the centroids 93c and 94c is similar to the method for calculating the above-described centroid 101.

Next, the controller 80 calculates a distance between the centroids 93c and 94c (i.e., a movement distance of the target 90 during one scan) with respect to each of the X direction corresponding to the first direction D1 and the Y direction corresponding to the second direction D2. Next, the controller 80 calculates the conveyance velocities V1 and V2 by the following equations (1) and (2). T represents a time required to scan the target 90 once by the first area sensor 50a.

$$V1 = L1/T \ldots \quad (1)$$

$$V2 = L2/T \ldots \quad (2)$$

In an alternative embodiment, the conveyance velocities V1 and V2 may be detected by any method different from the above-described method. For example, the sorting apparatus 10 may include two line sensors disposed at different detection positions (positions in the conveyance route where the target 90 is imaged), respectively. Then, the controller 80 may compare two images acquired by the two line sensors and calculate the conveyance velocities V1 and V2 based on a movement distance of the same target 90 between these two images. Alternatively, the controller 80 may calculate the conveyance velocities V1 and V2 based on a color shift amount between two or more images in different colors that are acquired by a color line sensor, as discussed in WO2021/177173.

Next, the controller 80 corrects the first image 100 based on the conveyance velocity V1 and/or the conveyance velocity V2. Such a correction is made for each grain of the target 90. First, the correction of the image based on the conveyance velocity V2 in the second direction D2 will be described. The controller 80 corrects the size of the target 90 in the direction (the Y direction) corresponding to the second direction D2 in the image acquired by the first line sensor 40a in a direction for reducing or eliminating the influence that is exerted on the image (more specifically, the size of the image of the target 90 in the direction corresponding to the second direction D2) by a difference between the conveyance velocity V2 of the target 90 in the second direction D2 and a design value regarding the conveyance velocity V2 in the second direction D2 (hereinafter also referred to as a reference value VR).

For example, if the conveyance velocity V2 in the second direction D2 that is calculated by the conveyance velocity calculation portion 83 is higher than the reference value VR, the target 90 appears in a smaller size in the direction corresponding to the second direction D2 in the image than the actual size. In such a case, the controller 80 corrects the image so as to enlarge the size of the target 90 in the direction corresponding to the second direction D2 in the image to reduce or eliminate the influence thereof.

Conversely, if the conveyance velocity V2 in the second direction D2 that is calculated by the conveyance velocity calculation portion 83 is lower than the reference value VR, the target 90 appears in a larger size in the direction corresponding to the second direction D2 in the image than the actual size. In such a case, the controller 80 corrects the image so as to reduce the size of the target 90 in the direction corresponding to the second direction D2 in the image to reduce or eliminate the influence thereof.

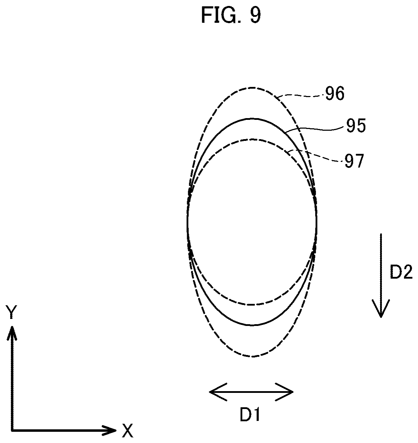

Since the actual conveyance velocity V2 of the target 90 in the second direction D2 and the size of the target 90 in the direction corresponding to the second direction D2 in the image are in an inverse proportion relationship as described above, the influence on the image due to a fluctuation of the conveyance velocity V2 can be minimized (i.e., the size of the target 90 in the image can be corrected into the actual size) by making a correction of multiplying the dimension (i.e., the number of pixels) of the image of the target 90 acquired by the first line sensor 40a in the direction corresponding to the second direction D2 by a ratio of V2/VR. Fig. 9 illustrates one example of such a correction. If the conveyance velocity V2 is lower than the reference value VR, a target 96 (the image of the target 90 before the correction) is reduced in size only in the Y direction corresponding to the second direction D2 at the ratio of V2/VR, and a target 95 (the image of the target 90 in the actual size) is acquired as a result. On the other hand, if the conveyance velocity V2 is higher than the reference value VR, a target 97 (the image of the target 90 before the correction) is enlarged in size only in the Y direction corresponding to the second direction D2 at the ratio of V2/VR, and the target 95 (the image of the target 90 in the actual size) is acquired as a result. According to such an image correction, the above-described influence of the first characteristic of the line sensor can be reduced or eliminated, and therefore the condition of the target 90 can be further accurately discriminated.

Next, the correction of the image 100 based on the conveyance velocity V1 in the first direction D1 will be described. The controller 80 corrects the coordinate values in the first direction D1 at the plurality of pixels forming the image of the target 90 by an amount corresponding to a shift of the image caused by the conveyance velocity V1 in the first direction D1. More specifically, the coordinate values of the target 90 in the first direction D1 are shifted between an image region of the target 90 acquired by an N-th scan (N is a natural number) and an image region of the target 90 acquired by an N+1-th scan by a distance L3 by which the target 90 moves in the first direction D1 during one scan time of the first line sensor 40a. In light thereof, the controller 80 sets the first scan conducted on one target 90 as a reference, and corrects the coordinate values of the image of the target 90 acquired by a second or later scan so as to return the coordinate values to the original position by a distance corresponding to a shift from the reference. The correction amount (the actual distance) of the coordinate values of an image region of the target 90 acquired by an M-th scan (M is an integer equal to or greater than 2) is expressed as (M - 1) × L3. The correction amount in units of the number of pixels can be calculated by dividing the value of (M - 1) × L3 by the size of a pixel of the first line sensor 40a in the first direction D1 (i.e., the size per pixel).

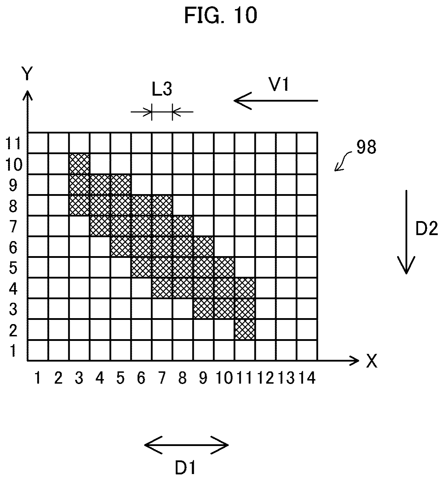

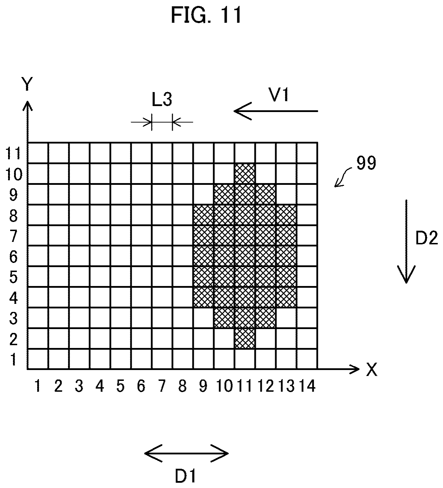

Figs. 10 and 11 illustrate one example of such a correction. Each cell in the drawings represents one pixel forming the image. Further, numerical values in the drawings represent coordinate values in an XY coordinate system defined by the X direction corresponding to the first direction D1 and the Y direction corresponding to the second direction D2. In this example, a coordinate value in the Y direction is assigned to each scan of the first line sensor 40a. In other words, the Y coordinate value indicates what number scan results in the acquisition of the linear image region. Hatched cells in Fig. 10 represent the pixels indicating the target 90 in the image before the correction (illustrated as a target 98), and hatched cells in Fig. 11 represent the pixels indicating the target 90 in the image after the correction (illustrated as a target 99).

Further, Figs. 10 and 11 illustrate an example supposing that the direction of the conveyance velocity V1 is a direction toward a negative direction of the X coordinate, and the distance L3 (the distance by which the target 90 moves in the first direction D1 during one scan time) is equal to the resolution of the first line sensor 40a in the first direction D1. As illustrated, the image of the target 98 illustrated in Fig. 10 (the image of the target 90 imaged into a distorted shape due to the conveyance velocity V1 in the first direction D1) is corrected in such a manner that the X coordinate value is increased by the distance L3 in terms of the X coordinate (the distance corresponding to one pixel in this example) as the Y coordinate value is incremented by one using the line along which the Y coordinate value is 2 as a reference, and is thereby corrected into the image of the target 99 illustrated in Fig. 11 (the image of the target 90 in the actual shape). According to such an image correction, the above-described influence of the second characteristic of the line sensor can be reduced or eliminated, and therefore the condition of the target 90 can be further accurately discriminated.

In the present embodiment, the identification processing is performed for each grain of the target 90, and therefore the controller 80 can correct the image of the corresponding target 90 based on the conveyance velocities V1 and V2 calculated for each target 90. According to this configuration, the controller 80 can make an accurate correction for each individual target 90 using the accurate conveyance velocities V1 and V2 specific to this target 90.

According to the above-described sorting apparatus 10, the first detection region 43 of the line sensors 40a and 40b and the second detection region 53 of the area sensors 50a and 50b overlap each other, and therefore the first line sensor 40a and the first area sensor 50a can be disposed at positions relatively close to each other. Similarly, the second line sensor 40b and the second area sensor 50b can be disposed at positions relatively close to each other. As a result, the size of the detection unit 20 and thus the size of the sorting apparatus 10 can be reduced.

In addition, the light sources 30a and 30b are shared between the line sensors 40a and 40b and the area sensors 50a and 50b. This configuration also contributes to allowing the first line sensor 40a (or the second line sensor 40b) and the first area sensor 50a (or the second area sensor 50b) to be disposed at relatively close positions.

In addition, both the first detection region 43 of the line sensors 40a and 50a and the second detection region 53 of the area sensors 50a and 50b are disposed on the falling trajectory of the target 90 from the conveyance portion that conveys the target 90 (which is the chute 73 in the above-described embodiment, but may be a conveyor). This layout also contributes to allowing the first line sensor 40a (or the second line sensor 40b) and the first area sensor 50a (or the second area sensor 50b) to be disposed at relatively close positions compared with such a layout that one of the first detection region 43 and the second detection region 53 is located on the conveyance portion and the other is located on the falling trajectory from the conveyance portion.

Further, according to the configuration in which the first detection region 43 of the line sensors 40a and 40b and the second detection region 53 of the area sensors 50a and 50b overlap each other (hereinafter also referred to as an overlap configuration), the conveyance route of the target 90 (i.e., the necessary falling distance) can be shortened. As a result, the size of the sorting apparatus 10 can be reduced. Further, according to the overlap configuration, the same portion of the same target 90 can be imaged by the line sensors 40a and 40b and the area sensors 50a and 50b simultaneously. In other words, a period in which the behavior of the target 90 is unknown (i.e., a period in which the target 90 is conveyed while being imaged by neither the line sensors 40a and 40b nor the area sensors 50a and 50b) is not interposed between the timing when the first image 100 is acquired and the timing when the second image 110 is acquired, and therefore the identification processing can be efficiently and accurately performed.

In addition, the line sensors 40a and 40b and the area sensors 50a and 50b can image the same target 90 simultaneously due to the overlap configuration. Such a configuration also contributes to allowing the first line sensor 40a (or the second line sensor 40b) and the first area sensor 50b (or the second area sensor 50b) to be disposed at relatively close positions, and allowing the identification processing to be efficiently and accurately performed.

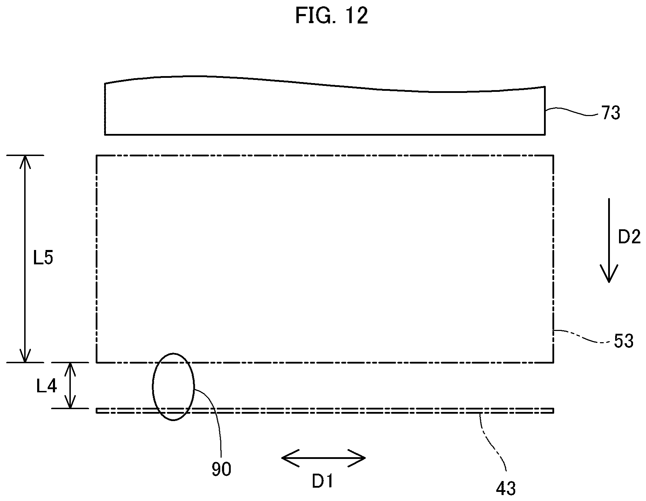

The configuration allowing the line sensors 40a and 40b and the area sensors 50a and 50b to image the same target 90 simultaneously is not limited to the above-described overlap configuration, and can include a configuration in which the first detection region 43 of the line sensors 40a and 40b and the second detection region 53 of the area sensors 50a and 50b are spaced apart in the second direction D2. For example, the configuration allowing the line sensors 40a and 40b and the area sensors 50a and 50b to image the same target 90 simultaneously can also include a configuration in which the first detection region 43 and the second detection region 53 are disposed in such a manner that there is a moment when a part of the target 90 in transit is located in the first detection region 43 and another part of the target 90 in transit is located in the second detection region 53 as illustrated in Fig. 12.

In an alternative embodiment, the first detection region 43 of the line sensors 40a and 40b and the second detection region 53 of the area sensors 50a and 50b may be located adjacent to each other instead of the overlap configuration. Such a configuration also allows the first line sensor 40a (or the second line sensor 40b) and the first area sensor 50b (or the second area sensor 50b) to be disposed at relatively close positions, and the identification processing to be efficiently and accurately performed.

The term "adjacent" used here may be defined to mean, for example, that the first detection region 43 and the second detection region 53 are located close to each other enough to allow the single detection unit 20 to provide both the first detection region 43 and the second detection region 53. Alternatively, the term "adjacent" may be defined to mean that the first detection region 43 and the second detection region 53 are located close to each other enough to allow the light sources 30a and 30b to be shared between the line sensors 40a and 40b and the area sensors 50a and 50b. Alternatively, the term "adjacent" may be defined to mean that the first detection region 43 and the second detection region 53 are located close to each other enough to allow the line sensors 40a and 40b and the area sensors 50a and 50b to image the same target 90 simultaneously. Alternatively, the term "adjacent" may be defined to mean that the first detection region 43 and the second detection region 53 are located close to each other enough to allow both the first detection region 43 and the second detection region 53 to be disposed on the falling trajectory of the target 90 from the conveyance portion.

Alternatively, the term "adjacent" may be defined to mean that a separation distance L4 between the first detection region 43 and the second detection region 53 in the direction (i.e., the second direction D2) orthogonal to the direction in which the plurality of light detection elements of the line sensors 40a and 50a is linearly arranged (i.e., the first direction D1) is equal to or shorter than a width L5 of the second detection region 53 in the second direction D2 as illustrated in Fig. 12. Fig. 12 illustrates an example in which the first detection region 43 is located on the downstream side (i.e., the lower side) of the second detection region 53 in the conveyance route of the target 90, but the first detection region 43 may be located on the upstream side (i.e., the upper side) of the second detection region 53.

In a further alternative embodiment, the conveyance velocities V1 and V2 may be detected by a method not using the area sensors 50a and 50b. In this case, the correction of the image 100 based on the conveyance velocities V1 and V2 may be made before the identification processing. In other words, the identification processing may be performed based on the corrected image. This allows the identification processing to be performed further accurately.

In a further alternative embodiment, the area sensors 50a and 50b may be color sensors (but not limited thereto). The controller 80 may determine a degree of consistency in shape and/dimension between the target 90 in the first image 100 and the target 90 in the second image 110 that are determined to be the same by the identification processing. The degree of consistency may be evaluated based on, for example, a ratio of the feature quantity between the target 90 in the first image 100 and the target 90 in the second image 110. In this case, the feature quantity may be, for example, at least one of an area, a height, a width, a perimeter length, and a degree of circularity. Alternatively, the degree of consistency may be evaluated based on, for example, any similarity index. The controller 80 may discriminate the color condition of the target 90 based on the second image 110 acquired by the area sensors 50a and 50b instead of or in addition to the first image 100 acquired by the line sensors 40a and 40b, if the consistency in shape and/or dimension is lower than a predetermined degree (for example, the ratio of the feature quantity is lower than a threshold value).

In the case of the low consistency in shape and/or dimension, it is highly likely that the target 90 in the first image 100 acquired by the line sensors 40a and 40b is imaged only over a narrower range (for example, the narrowest side surface) of the entire target 90 due to a direction in which the target 90 faces when being imaged. According to this alternative embodiment, even in such a case, the color condition of the target 90 is discriminated based on the second image 110 acquired by the area sensors 50a and 50b (i.e., an image in which the target 90 is likely to be imaged entirely), and therefore a reduction in the discrimination accuracy can be prevented or lessened. This alternative embodiment may be implemented independently of the above-described embodiments (for example, the above-described various positional relationships between the first detection region 43 and the second detection region 53).

In a further alternative embodiment, the area sensors 50a and 50b may be color sensors (but not limited thereto). The controller 80 may determine the degree of consistency in shape and/dimension. The controller 80 may sort the target 90 by selectively using the condition of the target 90 discriminated based on the first image 100 acquired by the line sensors 40a and 40b, the condition of the target 90 discriminated based on the second image 110 acquired by the area sensors 50a and 50b, and the above-described consistency in shape and/or dimension. According to this alternative embodiment, the discrimination accuracy and/or the sorting accuracy can be improved.

For example, in the case where the sorting apparatus 10 is configured in a multistage manner (the sorting apparatus 10 includes N ordered sorting systems not arranged in parallel (N is an integer equal to or larger than 2), when the consistency is lower than a predetermined degree at an M-th sorting system (M is any of 1 to N), the controller 80 may determine a destination to which the target 90 corresponding to this low consistency is supplied from the M-th sorting system (i.e., whether the target 90 is targeted for removal at this M-th sorting system) without determining whether the target 90 is the acceptable product/defective product based on the first image 100 and/or the second image 110 so as to give again the target 90 an opportunity to be imaged, discriminated, and sorted at a sorting system other than the M-th sorting system. The controller 80 may determine whether the target 90 is the acceptable product/defective product based on the first image 100 and/or the second image 110 when the consistency is the predetermined degree or higher at the M-th sorting system, and sort the target 90 based on this determination result. According to such a configuration, even when the consistency in shape and/or dimension is low between the first image 100 and the second image 110 and this makes it difficult to determine whether the target 90 is the acceptable product or the defective product, the target 90 can be given again an opportunity to be imaged, discriminated, and sorted, and therefore the sorting accuracy can be improved.

Having described embodiments, the above-described embodiments are intended to only facilitate the understanding of the present teachings, and are not intended to limit the present invention thereto. The present invention can be modified or improved without departing from the spirit thereof, and the present invention includes equivalents thereof. Further, each of the elements described in the claims and the specification can be combined in any manner or omitted in any manner within a range that allows it to remain capable of solving at least a part of the above-described problems or bringing about at least a part of the above-described advantageous effects.

For example, the sorting apparatus 10 may include an electromagnetic wave irradiation source that irradiates the target 90 with an electromagnetic wave having any wavelength instead of or in addition to the visible light source (the light sources 30a and 30b in the above-described example). Such an electromagnetic wave may be, for example, at least one of an X-ray and near-infrared light. In this case, the sorting apparatus 10 may include a line sensor and an area sensor including a plurality of electromagnetic wave detection elements corresponding to the wavelength of the electromagnetic wave emitted from the electromagnetic wave irradiation source.

The present disclosure can be embodied in various forms without being limited to the sorting apparatus. For example, the present disclosure may be embodied as a measurement apparatus for measuring a condition of a target. Such a measurement apparatus may have, for example, such a configuration that the sorting portion 60 is removed from the sorting apparatus 10 illustrated in Fig. 1. In this case, the controller 80 may output the condition of the target 90 (or a statistic thereof) to any device (for example, a display, a communication interface, a storage medium, or a printing apparatus).

DESCRIPTION OF THE REFERENCE NUMERALS

10 optical sorting apparatus, 20 detection unit, 30a first light source, 30b second light source, 31a first light, 31b second light, 40a first line sensor, 40b second line sensor, 41a light, 42a mirror, 43 first detection region, 50a first area sensor, 50b second area sensor, 51a angle of view, 53 second detection region, 60 sorting portion, 61 nozzle, 62 valve, 63 air, 71 storage tank, 72 feeder, 73 chute, 74 acceptable product discharge gutter, 75 defective product discharge gutter, 80 controller, 81 discrimination portion, 82 identification processing portion, 83 conveyance velocity calculation portion, 90 to 99 target, 93c, 94c centroid, 100 first image, 101, 101a, 101b, 101c centroid, 110 second image, 111, 111a, 111b, 111c circumscribed rectangle, D1 first direction, D2 second direction

**Claims**

1. A measurement apparatus for measuring a condition of a target, the measurement apparatus comprising:

a conveyance portion configured to convey the target;
an electromagnetic wave irradiation source configured to irradiate the target with an electromagnetic wave while the target is conveyed due to an action of the conveyance portion;
a line sensor including a plurality of linearly arranged electromagnetic wave detection elements, and configured to detect at least one of a reflected electromagnetic wave emitted from the electromagnetic wave irradiation source and reflected on the target and a transmitted electromagnetic wave emitted from the electromagnetic wave irradiation source and transmitted through the target;
an area sensor including a plurality of two-dimensionally arranged electromagnetic wave detection elements, and configured to detect at least one of the reflected electromagnetic wave and the transmitted electromagnetic wave; and
a discrimination portion configured to discriminate the condition of the target based on a first image acquired by the line sensor and a second image acquired by the area sensor,
wherein the measurement apparatus is configured in such a manner that a first detection region, which is a region where the target is detected by the line sensor, and a second detection region, which is a region where the target is detected by the area sensor, overlap each other or are located adjacent to each other.

2. A measurement apparatus for measuring a condition of a target, the measurement apparatus comprising:

a conveyance portion configured to convey the target;
an electromagnetic wave irradiation source configured to irradiate the target with an electromagnetic wave while the target is conveyed due to an action of the conveyance portion;
a line sensor including a plurality of linearly arranged electromagnetic wave detection elements, and configured to detect at least one of a reflected electromagnetic wave emitted from the electromagnetic wave irradiation source and reflected on the target and a transmitted electromagnetic wave emitted from the electromagnetic wave irradiation source and transmitted through the target;
an area sensor including a plurality of two-dimensionally arranged electromagnetic wave detection elements, and configured to detect at least one of the reflected electromagnetic wave and the transmitted electromagnetic wave; and
a discrimination portion configured to discriminate the condition of the target based on a first image acquired by the line sensor and a second image acquired by the area sensor,
wherein the measurement apparatus satisfies at least one of:

(A) a first detection region, which is a region where the target is detected by the line sensor, and a second detection region, which is a region where the target is detected by the area sensor, overlap each other;
(B) the line sensor and the area sensor are configured to image the same target simultaneously;
(C) a separation distance between the first detection region and the second detection region in an orthogonal direction, which is a direction orthogonal to a direction in which the plurality of electromagnetic wave detection elements of the line sensor is linearly arranged, is equal to or shorter than a width of the second detection region in the orthogonal direction;
(D) the same electromagnetic wave irradiation source is shared between the line sensor and the area sensor; and
(E) both the first detection region and the second detection region are located on an in-air conveyance trajectory of the target that is departed from the conveyance portion and is present in the air after being conveyed by the conveyance portion.

3. The measurement apparatus according to claim 1 or 2, wherein the measurement apparatus is configured in such a manner that the first detection region and the second detection region overlap each other.

4. The measurement apparatus according to any one of claims 1 to 3, wherein the discrimination portion is configured to discriminate a color condition of the target based on the first image and also discriminate a condition about shape and/or dimension of the target based on the second image.

5. The measurement apparatus according to any one of claims 1 to 4, further comprising an identification processing portion configured to determine identity between a first target, which is the target in the first image, and a second target, which is the target in the second image.

**6.** The measurement apparatus according to claim 5, wherein the identification processing portion is configured to determine the identity between the first target and the second target based on a positional relationship between a centroid of one of the first target and the second target and an outline or a circumscribed rectangle of the other of the first target and the second target.

**7.** The measurement apparatus according to claim 5 or 6, further comprising a conveyance velocity detection portion configured to detect a conveyance velocity in a predetermined direction for each of the targets with respect to the target in transit,
wherein the discrimination portion is configured to make, based on the corresponding conveyance velocity in the predetermined direction, the discrimination of the condition of the target based on the first image.

**8.** The measurement apparatus according to any one of claims 5 to 7 dependent from claim 4, wherein the discrimination portion is configured to discriminate the color condition of the target based on the second image instead of or in addition to the first image when consistency in shape and/or dimension is lower than a predetermined degree between the first target and the second target that are determined to be the same.

**9.** A sorting apparatus comprising:

the measurement apparatus according to any one of claims 1 to 8; and
a sorting portion configured to sort the target based on a result of the discrimination by the discrimination portion.

FIG. 1

FIG. 2

FIG. 3

FIG. 4

FIG. 5

FIG. 6

FIG. 7

# FIG. 8

FIG. 9

FIG. 10

FIG. 11

FIG. 12

## INTERNATIONAL SEARCH REPORT

| | International application No. |
|---|---|
| | **PCT/JP2024/000609** |

**A. CLASSIFICATION OF SUBJECT MATTER**

*G01N 21/85*(2006.01)i; *B07C 5/342*(2006.01)i
FI:   G01N21/85 A; B07C5/342

According to International Patent Classification (IPC) or to both national classification and IPC

**B. FIELDS SEARCHED**

Minimum documentation searched (classification system followed by classification symbols)

G01N21/84-G01N21/958,G01N15/00-G01N15/1492,B07C1/00-B07C99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2006-110516 A (SEIREI INDUSTRY CO., LTD.) 27 April 2006 (2006-04-27) paragraphs [0031], [0032], fig. 1, 2 | 1-3, 5, 9 |
| Y | | 4, 6-7 |
| A | | 8 |
| Y | JP 2017-72529 A (HITACHI ZOSEN CORP.) 13 April 2017 (2017-04-13) paragraph [0063] | 4, 6-7 |
| A | | 8 |
| Y | JP 2008-268232 A (DAINIPPON SCREEN MFG. CO., LTD.) 06 November 2008 (2008-11-06) paragraph [0076] | 6-7 |
| A | | 8 |

☑ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **24 January 2024** | **06 February 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**

International application No.

**PCT/JP2024/000609**

| C. | DOCUMENTS CONSIDERED TO BE RELEVANT | |
|---|---|---|
| Category* | Citation of document, with indication, where appropriate, of the relevant passages | Relevant to claim No. |
| Y | JP 2008-241298 A (DAINIPPON SCREEN MFG. CO., LTD.) 09 October 2008 (2008-10-09) paragraph [0060] | 6-7 |
| A | | 8 |
| Y | JP 2006-300747 A (TOSHIBA MITSUBISHI-ELECTRIC INDUSTRIAL SYSTEMS CORPORATION) 02 November 2006 (2006-11-02) paragraph [0041] | 7 |
| A | | 8 |

Form PCT/ISA/210 (second sheet) (July 2022)

**INTERNATIONAL SEARCH REPORT**
Information on patent family members

International application No.

**PCT/JP2024/000609**

| Patent document cited in search report | | | Publication date (day/month/year) | Patent family member(s) | Publication date (day/month/year) |
|---|---|---|---|---|---|
| JP | 2006-110516 | A | 27 April 2006 | (Family: none) | |
| JP | 2017-72529 | A | 13 April 2017 | (Family: none) | |
| JP | 2008-268232 | A | 06 November 2008 | (Family: none) | |
| JP | 2008-241298 | A | 09 October 2008 | (Family: none) | |
| JP | 2006-300747 | A | 02 November 2006 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017072529 A
- WO 2021177173 A